# FASCICULE DE BREVET EUROPEEN

(11) **EP 0 580 203 B1**
(45) Date de publication et mention de la délivrance du brevet: **12.06.1996**
(21) Numéro de dépôt: 93201919.3
(22) Date de dépôt: 01.07.1993
(51) Int. Cl.: G05B 19/18

(54) **Procédé et dispositif de fabrication d'éléments adhésifs destinés à être appliqués sur une surface tridimensionnelle en vue de sa décoration**
Verfahren und Vorrichtung zur Herstellung von Klebeelementen zur Dekoration auf einer dreidimensionalen Oberfläche
Method and device for the manufacturing of adhesive elements to be applied on a tri-dimensional surface for the decoration thereof

(30) Priorité: 10.07.1992 FR 9208890
(43) Date de publication de la demande: 26.01.1994
(73) Titulaire: C.A.S.O. CONCEPTION AERONAUTIQUE DU SUD-OUEST, Société Anonyme, F-31700 Blagnac (FR); AEROSPATIALE Société Nationale Industrielle, F-75781 Paris Cédex 16 (FR)
(72) Inventeur: Servanty, Guy, F-31490 Leguevin (FR); Obry, Philippe, F-31700 Beauzelle (FR)
(74) Mandataire: Cabinet BARRE LAFORGUE & associés

(56) Documents cités:
- EP-A- 0 307 256
- EP-A- 0 418 052
- US-A- 5 023 800

## Description

L'invention concerne un procédé et un dispositif de fabrication d'éléments adhésifs destinés à être appliqués sur une surface tridimensionnelle en vue de sa décoration. Elle s'applique, en particulier, à la décoration d'aéronefs.

La réalisation de l'ensemble de la décoration d'un aéronef est réalisée de façon très artisanale et nécessite un grand nombre d'opérations devant être réalisées avec minutie et nécessitant un personnel spécialisé.

En premier lieu, et en ce qui concerne les logos, il est réalisé, dans un premier temps, un support translucide grandeur nature de ce logo. Ce support est ensuite positionné sur l'avion avec tous les problèmes que pose l'application d'un support plan sur une surface tridimensionnelle de forme complexe (plis du support nécessitant de le découper...). Pour la suite, deux solutions sont utilisées :

Selon une première solution, on effectue un marquage du logo sur l'aéronef, tout d'abord en perforant le support sur son contour, puis en matérialisant sur cet aéronef l'emplacement de ces perforations. Le support est alors retiré et on applique une bande collante reliant les perforations, et délimitant les contours du logo à peindre.

Selon une deuxième solution, on réalise, parallèlement au support, un pochoir adhésif que l'on glisse sous ce support et que l'on applique sur l'avion.

Comme indiqué ci-dessus, on constate que toutes ces opérations sont délicates et nécessitent, d'une part un temps de travail important et, d'autre part, une main-d'oeuvre qualifiée. De plus, le résultat obtenu dépend notablement du savoir-faire du personnel réalisant la décoration, et du positionnement des supports, et il est pratiquement impossible d'obtenir une répétabilité parfaite de cette décoration d'un avion au suivant.

Enfin, la décoration étant réalisée dans un premier temps sur un support plan, qui est ensuite appliqué sur une surface tridimensionnelle, le résultat n'est jamais conforme au tracé désiré initialement. De ce fait, il s'avère qu'il arrive fréquemment que ce support ait à être modifié une ou plusieurs fois avant que la décoration ne donne entièrement satisfaction à la compagnie propriétaire de l'avion.

Par ailleurs, en ce qui concerne les bandes horizontales, verticales, obliques..., la méthode utilisée est encore plus artisanale que pour les logos. En effet, cette méthode consiste à positionner, dans un premier temps, les cotes de départ de ces bandes que l'on matérialise sur l'avion. A partir de ces cotes de départ, on applique des bandes collantes destinées à délimiter les bandes à peindre. Toutefois, compte tenu de la forme évolutive de la surface des aéronefs, la linéarité de ces bandes collantes doit être contrôlée visuellement et vu la taille de ces aéronefs l'on conçoit la difficulté que représente une parfaite mise en place de telles bandes.

Enfin, et afin de tenter d'obtenir une répétabilité visuelle entre le premier avion décoré et les avions suivants, on applique sur l'aéronef un support translucide sur lequel on trace les limites des bandes et des références.

Comme pour les logos, on constate que toutes les opérations précitées sont longues et délicates et nécessitent une main-d'oeuvre qualifiée. De plus, également comme précédemment, et malgré la confection d'un modèle support, le résultat est en grande partie fonction du savoir-faire du personnel et il est pratiquement impossible d'obtenir une parfaite répétabilité.

La présente invention vise à pallier l'ensemble des inconvénients sus-évoqués et se propose de fournir un procédé et un dispositif permettant de réaliser de façon fiable et rationnelle la "première décoration" d'une surface tridimensionnelle, et autorisant une parfaite répétabilité de cette décoration.

Un autre objectif est de fournir un procédé permettant de réaliser des décorations constituant, sur la surface tridimensionnelle, l'image parfaite de la décoration visualisée en deux dimensions.

Un autre objectif est de fournir un procédé permettant de valider une décoration avant que celle-ci soit réalisée.

A cet effet, l'invention vise un procédé de fabrication d'éléments adhésifs destinés à être appliqués sur une surface tridimensionnelle en vue de sa décoration, caractérisé en ce que :
a) on mémorise un modèle tridimensionnel constitué par une représentation mathématique de la surface tridimensionnelle à décorer,
b) on mémorise complémentairement les coordonnées de lignes et points de référence de la surface tridimensionnelle pour obtenir un modèle tridimensionnel référencé,
c) on mémorise un modèle bidimensionnel constitué par une représentation mathématique des contours délimitant des zones à décorer, en projection dans un plan,
d) on effectue des calculs de transformation sur le modèle bidimensionnel en vue d'obtenir un modèle bidimensionnel référencé positionné par rapport à des lignes et/ou points de référence,
e) on effectue des calculs de projection du modèle bidimensionnel référencé sur le modèle tridimensionnel, de façon à obtenir une représentation mathématique des contours des zones à décorer sur la surface tridimensionnelle, associés aux lignes et points de référence,
f) on effectue des calculs de développé sur la représentation mathématique obtenue en (e) de façon à obtenir des données représentatives du développé des contours des zones à décorer et des lignes et points de référence,
g) on découpe les éléments adhésifs au moyen d'une machine à découper à commande numérique pilotée à partir des données obtenues en (f),
h) et on reporte sur au moins certains éléments adhésifs découpés, les points et/ou lignes de référence, au moyen d'une machine à tracer à commande numérique pilotée à partir des données obtenues en (f).

(Il est à noter que par le terme adhésif, on entend définir tout moyen permettant d'appliquer et de maintenir un élément sur une surface tridimensionnelle, c'est-à-dire autocollant, magnétique....).

Le procédé selon l'invention consiste donc, à partir d'un modèle bidimensionnel constituant une "image" de la décoration, à référencer ce modèle pour positionner la décoration sur le modèle tridimensionnel référencé, puis à effectuer des calculs de projection de façon à obtenir une représentation tridimensionnelle de la décoration référencée par rapport à la surface tridimensionnelle, et enfin à effectuer des calculs de développé de cette représentation tridimensionnelle.

Les éléments adhésifs obtenus ensuite par découpe et sur lesquels sont tracés les points et/ou lignes de référence, peuvent alors être appliqués de façon très aisée sur la surface tridimensionnelle sans nécessiter un quelconque support puisqu'ils comportent des repères de référence permettant leur positionnement par rapport à des références de ladite surface tridimensionnelle.

La facilité de pose est, en outre, obtenue grâce à une adaptabilité parfaite des éléments adhésifs qui sont conçus en trois dimensions et développés avant découpe, ce qui permet de prendre en compte en amont les formes de la surface tridimensionnelle.

Outre son côté rationnel, ce procédé permet, de plus, de réaliser des décorations qui, grâce aux calculs de développé, constituent l'image exacte de la décoration telle que souhaitée. En outre, il assure une répétabilité parfaite des décorations et du positionnement de ces dernières sur la surface tridimensionnelle.

Selon une autre caractéristique de l'invention, pour une zone à décorer de la surface tridimensionnelle, (e) :
- on mémorise au moins un point de contrôle correspondant à un emplacement à partir duquel doit être effectué le contrôle de cette zone à décorer, ledit point de contrôle étant positionné dans l'espace par rapport aux lignes et points de référence du modèle tridimensionnel référencé,
- on mémorise les coordonnées d'un point du modèle tridimensionnel référencé, dit point à viser correspondant sensiblement au centre de la zone à décorer, et les coordonnées d'une droite, dite ligne de visée, passant par ledit point à viser et le point de contrôle,
- on mémorise les coordonnées dans le modèle tridimensionnel référencé, d'un plan, dit de visualisation, orthogonal à la ligne de visée et contenant le point de contrôle,
- on effectue des calculs de transformation sur le modèle bidimensionnel référencé en vue d'obtenir une représentation mathématique des contours de la zone à décorer dans le plan de visualisation,
- on effectue des calculs de transformation sur le modèle tridimensionnel référencé de façon à obtenir une représentation en vue conique suivant la ligne de visée, et avec pour origine le point de contrôle dudit modèle tridimensionnel,
- on effectue des calculs de transformation sur le modèle bidimensionnel référencé, dans le plan de visualisation, de façon à mettre en correspondance les points et lignes de référence dudit modèle bidimensionnel et du modèle tridimensionnel en vue conique,
- on effectue des calculs de projection du modèle bidimensionnel sur le modèle tridimensionnel en vue conique, orthogonalement au plan de visualisation, de façon à obtenir une représentation mathématique des contours de la zone à décorer sur la surface tridimensionnelle.

Un tel mode de projection, utilisant une représentation en vue conique de la surface tridimensionnelle permet d'obtenir une image de cette dernière et donc de la projection de la décoration qui se rapproche le plus de l'image réelle telle qu'elle sera vue du ou des points de contrôle.

De plus, cette représentation en vue conique permet, durant la conception, de vérifier et de valider les résultats obtenus.

Selon une autre caractéristique de l'invention, pour une zone à décorer de la surface tridimensionnelle, (f) :
f1) on effectue des calculs de transformation sur le modèle tridimensionnel en vue d'obtenir, par approximation, une représentation mathématique d'une surface tridimensionnelle développable,
f2) on effectue des calculs de projection orthogonale des contours de la zone à décorer et des lignes et/ou points de référence liés à cette zone, de façon à obtenir une représentation mathématique desdits contours et lignes et/ou points de référence sur la surface tridimensionnelle développable,
f3) on effectue des calculs de développé sur la représentation mathématique obtenue en f2) de façon à obtenir des données représentatives du développé des contours des zones à décorer et des lignes et/ou points de référence.

Par ailleurs, selon une autre caractéristique visant l'application du procédé selon l'invention à la décoration d'une surface tridimensionnelle telle qu'un aéronef, composée de formes complexes :
(a) on mémorise un modèle tridimensionnel constitué d'un ensemble de surfaces élémentaires, dites pavés, liées entre elles par des lignes frontières,
f1) on sélectionne l'ensemble des pavés de la surface tridimensionnelle contenant les contours de la zone à décorer et les points et/ou lignes de référence liés à cette zone, et formant un sous-ensemble de ladite surface tridimensionnelle,
   . on mémorise des données représentatives du sous-ensemble de pavés précité,
   . on effectue sur ce sous-ensemble de pavés, des calculs de transformation en vue d'obtenir, par approximation, une représentation mathématique d'une surface développable.

De plus, selon un mode de réalisation avantageux, le procédé selon l'invention consiste préférentiellement à réaliser deux types d'éléments adhésifs destinés à remplir des fonctions différentes :
- des éléments adhésifs, dits de décoration, délimités par les zones à décorer,
- des éléments adhésifs, dits de positionnement, destinés à être appliqués sur la surface tridimensionnelle en correspondance avec des lignes et/ou points de référence de celle-ci, en vue de permettre de positionner les éléments de décoration par rapport auxdits lignes et/ou points de référence.

L'invention s'étend également à un dispositif pour la fabrication d'éléments adhésifs destinés à être appliqués sur une surface tridimensionnelle en vue de sa décoration, caractérisé en ce qu'il comprend en combinaison :
- des moyens de mémorisation de modèles tridimensionnels référencés constitués par des représentations mathématiques de surfaces tridimensionnelles à décorer et par des coordonnées de lignes et points de référence desdites surfaces,
- des moyens de mémorisation de modèles bidimensionnels constitués par des représentations mathématiques de contours délimitant des zones à décorer, en projection dans un plan,
- une unité de calcul connectée aux moyens de mémorisation et programmée pour effectuer, à partir de données mémorisées représentatives d'une surface tridimensionnelle à décorer, et de contours délimitant une zone à décorer,
   . des calculs de transformation sur le modèle bidimensionnel en vue d'obtenir un modèle bidimensionnel référencé positionné par rapport à des lignes et/ou points de référence,
   . des calculs de projection du modèle bidimensionnel référencé sur le modèle tridimensionnel, de façon à obtenir une représentation mathématique des contours des zones à décorer sur la surface tridimensionnelle, associés aux lignes et points de référence,
   . et des calculs de développé sur la représentation mathématique précitée de façon à obtenir des données représentatives du développé des contours des zones à décorer, et des lignes et points de référence,
- des moyens de visualisation connectés à l'unité de calcul en vue de permettre une visualisation interactive lors de chacune des étapes de calcul précitées,
- une machine à découper à commande numérique destinée à être pilotée à partir des données générées par l'unité de calcul,
- et une machine à tracer à commande numérique destinée à être pilotée à partir des données générées par l'unité de calcul.

D'autres caractéristiques, buts et avantages de l'invention ressortiront de la description détaillée qui suit en référence aux dessins annexés qui en représentent à titre d'exemple non limitatif un mode de réalisation préférentiel. Sur ces dessins qui font partie intégrante de la présente description :
- la figure 1 est une vue en perspective schématique des différents éléments constitutifs d'un dispositif conforme à l'invention,
- la figure 2 est un organigramme représentant la chaîne de traitement du dispositif selon l'invention,
- la figure 3 est une vue latérale de l'arrière d'un aéronef sur lequel sont disposés des éléments adhésifs de positionnement pour la peinture de bandes obliques,
- la figure 4 est une vue latérale de l'arrière de cet aéronef sur lequel sont disposés les éléments adhésifs de positionnement et les éléments adhésifs de décoration pour la peinture des bandes obliques,
- la figure 5 est une vue latérale de cet arrière d'aéronef après retrait des éléments adhésifs de positionnement,
- les figures 6, 7 et 8 représentent les divers éléments de positionnement des figures 3 et 4,
- les figures 9a-9c à 12a-12c représentent les divers éléments adhésifs de décoration des figures 4 et 5.

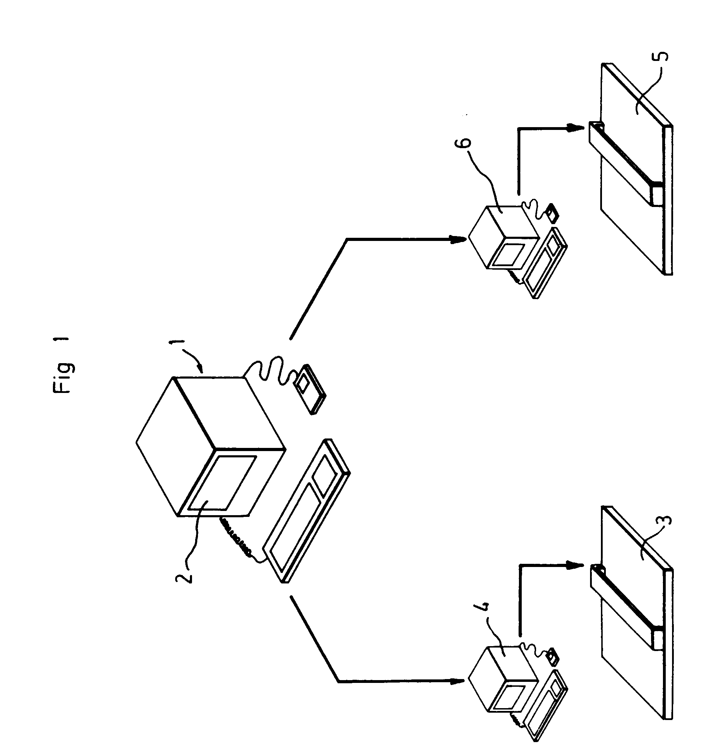

Le dispositif représenté à la figure 1 est destiné à la réalisation d'éléments adhésifs destinés à être appliqués sur une surface tridimensionnelle en vue de sa décoration.

Ce dispositif comprend, en premier lieu, une station de travail 1, comportant une unité de calcul programmée pour réaliser, à partir de données mémorisées, des fichiers constitués de données représentatives du développé des contours des zones à décorer associées à des lignes et points de référence de la surface tridimensionnelle.

Cette station de travail 1 comporte, en outre, un écran de visualisation 2 connecté à l'unité de calcul en vue de permettre une visualisation interactive autorisant une vérification et une validation des résultats obtenus.

Le dispositif selon l'invention comporte, par ailleurs, une machine à découper 3 à commande numérique pilotée par un micro-ordinateur 4 programmé de façon à générer des ordres de découpe exécutés sur les fichiers des contours des zones à décorer.

Ce dispositif comporte, de plus, une machine à tracer 5 à commande numérique également pilotée par un micro-ordinateur 6 programmé de façon à générer des ordres de tracé exécutés sur les fichiers des contours des zones à décorer.

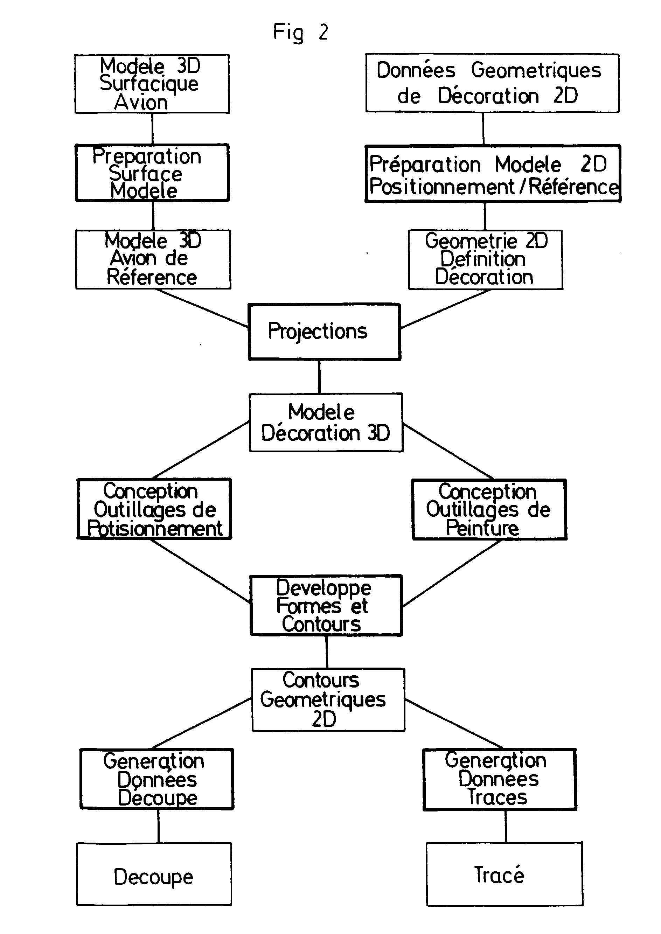

La chaîne de traitement permettant de réaliser les éléments adhésifs au moyen du dispositif selon l'invention est représentée à la figure 2.

Les données de base utilisées consistent en un modèle tridimensionnel constitué par une représentation mathématique de l'enveloppe extérieure de l'avion à décorer. Ce modèle tridimensionnel est mémorisé sous forme d'un ensemble de surfaces élémentaires, dites pavés, liées entre elles par des lignes frontières.

Dans un premier temps, le modèle tridimensionnel est référencé, c'est-à-dire que l'on enrichit ce modèle de références physiques obtenues soit par des relevés de cotes effectués directement sur l'avion, soit par consultation de la liasse de plans relative à cet avion.

Comme exemples de références physiques utilisées, on peut citer : les références cadres, les limites de tôlage, les lignes de fixation, les portes, les hublots, les trappes...

Parallèlement, les contours délimitant les zones à décorer (logos, bandes longitudinales...) sont modélisés, par exemple, par digitalisation, en vue d'obtenir des modèles bidimensionnels constitués par des données géométriques représentatives des contours des zones à décorer vues en plan.

Ce modèle bidimensionnel est ensuite enrichi de références en vue de positionner les zones à décorer par rapport aux projections dans un plan des références physiques de l'avion. On obtient ainsi des modèles bidimensionnels référencés des différentes décorations à réaliser sur l'avion.

A partir de ces données mémorisées et pour chaque zone à décorer d'un aéronef, on effectue dans un premier temps des calculs de projection du modèle bidimensionnel référencé sur le modèle tridimensionnel, de façon à obtenir une représentation mathématique des contours de cette zone à décorer sur la surface tridimensionnelle, associés aux lignes et points de référence.

Ces calculs de projection sont effectués comme explicité dans la revendication 2 en utilisant comme points de contrôle :
- pour les zones à décorer du tronçon à section constante des aéronefs, une succession de points de contrôle situés sur une ligne de contrôle parallèle audit tronçon et de même longueur que ce dernier,
- pour les zones à décorer de la pointe avant et de la pointe arrière des aéronefs, deux points de contrôle correspondant respectivement à chacune des extrémités de la ligne de contrôle précitée.

Ces calculs de projection permettent d'obtenir un modèle tridimensionnel de la décoration qui peut être visionné en vue conique sur l'écran de visualisation 2 avant d'être validé.

L'étape suivante consiste à concevoir sur le modèle tridimensionnel référencé et en fonction de l'ordre des opérations de peinture, l'ensemble des éléments adhésifs, communément appelés outillages, liés à chacune de ces opérations.

Ces outillages consistent, d'une part, en des outillages de décoration ou de peinture destinés à délimiter les zones à peindre, et d'autre part, en des outillages de positionnement permettant de positionner les outillages de peinture par rapport aux références physiques de l'aéronef.

Une fois cette conception réalisée, on effectue des calculs de développé de façon à obtenir des données représentatives du développé des contours des outillages précédemment définis.

Enfin, des programmes de génération, d'une part, des ordres de découpe des outillages, et d'autre part, des ordres de tracé sur ces outillages des lignes et/ou points de référence, sont exécutés sur les fichiers constitués des données représentatives des contours de ces outillages.

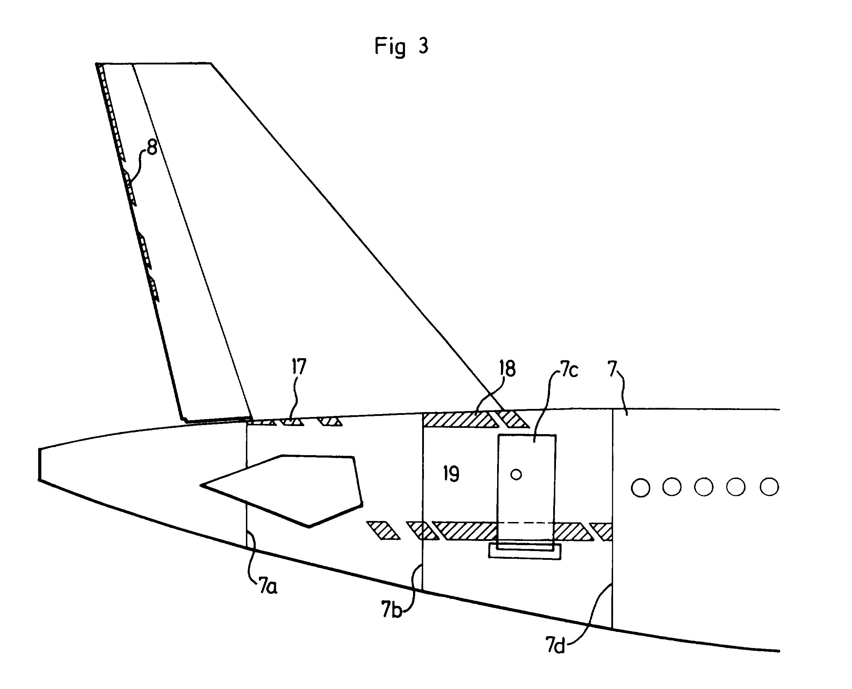

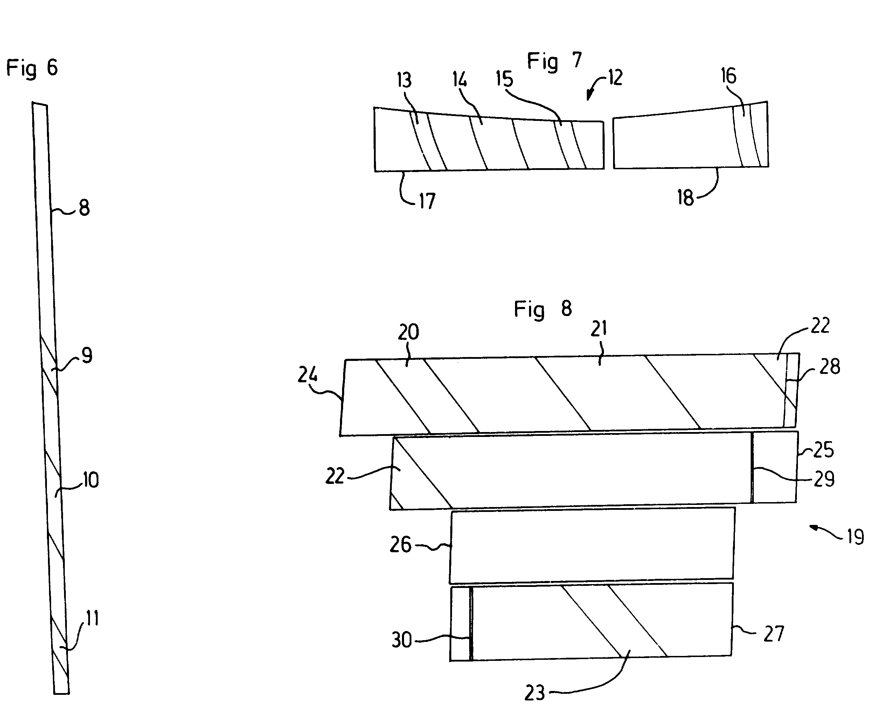

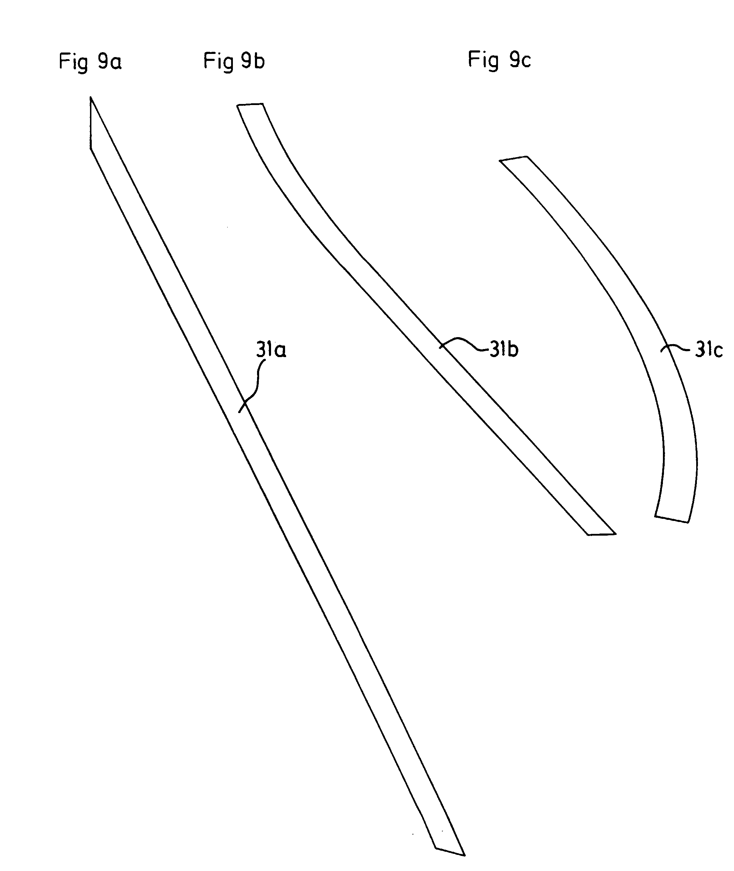

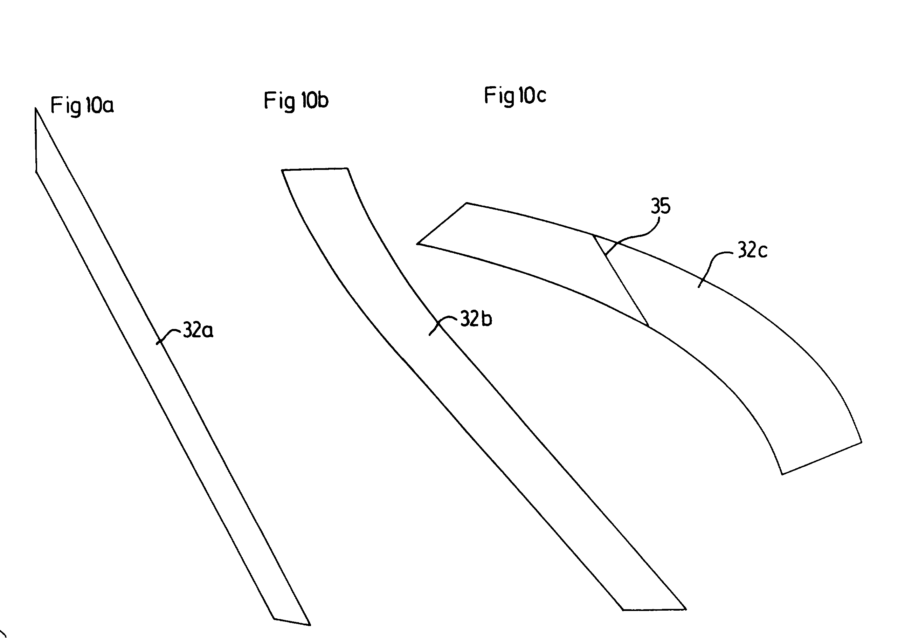

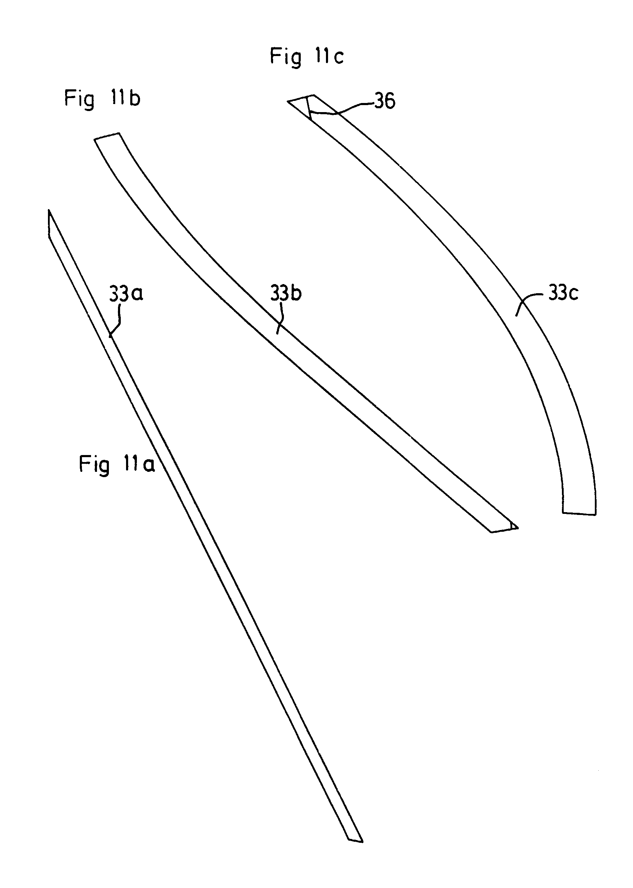

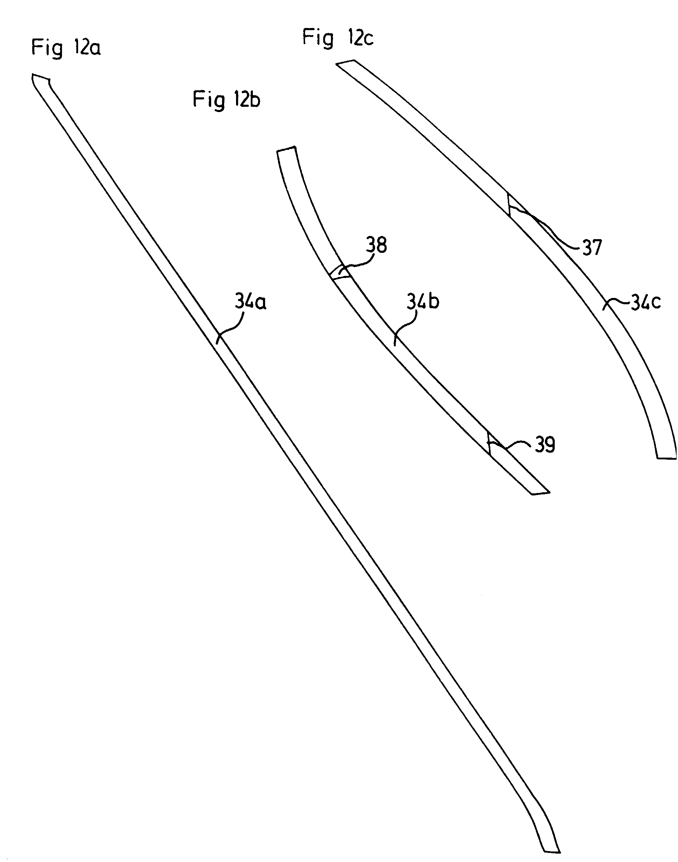

En tant qu'exemple d'illustration, les figures 6 à 12 représentent des outillages de positionnement et de peinture destinés à être appliqués sur la partie arrière d'un aéronef 7, de la façon représentée aux figures 3 à 5, en vue de la peinture sur cet aéronef de bandes longitudinales obliques. Tous ces outillages sont conçus pour que ces bandes de peinture paraissent droites à partir d'un point de contrôle situé à l'extrémité arrière de la ligne de contrôle décrite plus haut.

Tous ces outillages sont du type tricouches et comprennent une feuille adhésive collée sur une feuille de protection et un film adhésif d'application disposé sur la feuille adhésive.

De plus, les feuilles adhésives des outillages de positionnement sont pré-découpées de façon à permettre, une fois ces outillages positionnés sur l'aéronef 7, le retrait de parties desdites feuilles adhésives.

Tel que représenté aux figures 6, 7, 8, les outillages de positionnement sont au nombre de trois, et comportent chacun des bandes détachables déterminant une fois retirées des largeurs conjuguées de celles des outillages de peinture.

Le premier outillage de positionnement représenté à la figure 6 est un outillage de dérive 8 destiné à être appliqué le long du bord de fuite de cette dérive, à partir de l'extrémité haute de celle-ci. Il comporte trois bandes détachables 9, 10, 11 superposées.

Le deuxième outillage de positionnement représenté à la figure 7 est un outillage de positionnement 12 destiné à être appliqué au niveau de la liaison Karman-dérive. Cet outillage comporte quatre bandes détachables 13, 14, 15, 16. Il est, en outre, composé de deux tronçons 17, 18 séparés, référencés chacun au niveau de leur bord d'extrémité sur un des cadres 7a, 7b de l'aéronef 7.

Le troisième outillage de positionnement 19, représenté à la figure 8, est un outillage de positionnement destiné à être appliqué sur le fuselage. En vue de son positionnement en hauteur, cet outillage 19 est référencé, au niveau de son bord supérieur, sur la référence fuselage de l'aéronef 7 qui est matérialisée systématiquement sur tout aéronef. Cet outillage comporte également quatre bandes détachables 20, 21, 22, 23. Il est, par ailleurs, composé de quatre tronçons 24, 25, 26, 27 destinés à être disposés bout à bout et comportant en vue de leur positionnement longitudinal, une référence 28 par rapport au cadre 7b de l'aéronef 7, et une référence 29, 30 par rapport à chacun des côtés de la porte arrière 7c dudit aéronef.

Ces outillages de positionnement sont représentés à la figure 3, une fois appliqués sur l'aéronef 7 et après retrait des bandes détachables 9-11, 13-16, 20-23.

Les outillages de peinture sont quant à eux composés de quatre ensembles 31,32, 33, 34 formés chacun de trois tronçons de bandes 31a-31c, 32a-32c, 33a-33c, 34a-34c destinés à être disposés bout à bout.

Chacun de ces ensembles 31-34 comporte un tronçon de bande de dérive 31a, 32a, 33a, 34a destiné à être appliqué sur la dérive et à s'étendre entre les outillages de positionnement de dérive 8 et de liaison Karman-dérive 12.

Le deuxième tronçon de bande 31b, 32b, 33b, 34b de chacun de ces ensembles 31-34 est destiné à être appliqué sur le fuselage dans la continuité du premier tronçon et à s'étendre jusqu'à la référence fuselage de l'aéronef 7.

Le troisième tronçon de bande 31c, 32c, 33c, 34c de chacun des ensembles 31-34 est enfin destiné à être appliqué sur le fuselage dans la continuité du deuxième tronçon et à s'étendre jusqu'à l'axe de l'aéronef 7.

Il est à noter, en outre, que les tronçons de bande 32c, 33c, 34c des ensembles 32, 33,34 comportent des références, respectivement 35,36, 37 par rapport au cadre 7b et à un autre cadre 7d de l'aéronef 7. De plus, le tronçon 34b de l'ensemble 34 comporte une référence 38, 39 par rapport à chacun des côtés de la porte.

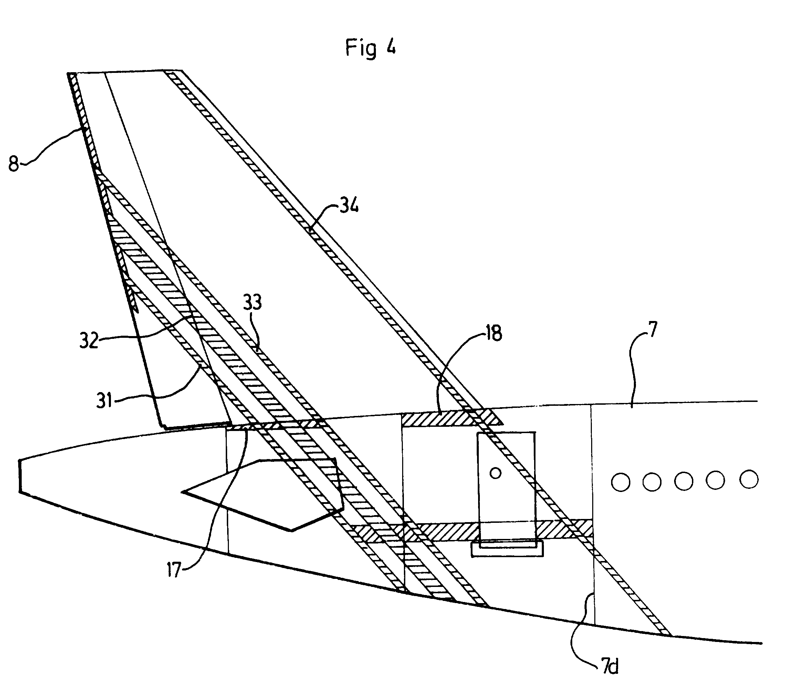

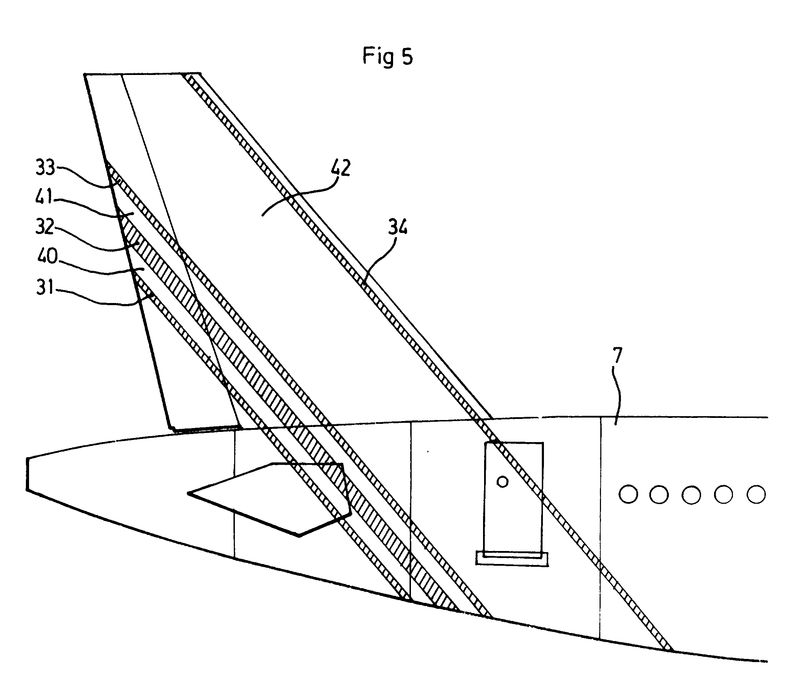

Ces outillages de peinture 31-34 sont représentés à la figure 4, une fois appliqués sur l'aéronef 7 et avant retrait des outillages de positionnement 8, 12, 19. Enfin, la figure 5 représente ces outillages de peinture 31-34 une fois les outillages de positionnement 8, 12, 19 retirés.

Tel que représenté à ces figures, ces outillages délimitent sur l'aéronef, deux bandes étroites 40, 41 et une bande 42 de plus grande largeur. Une fois ces bandes de surface peintes, il suffit de retirer les outillages de peinture et d'appliquer des bandes adhésives de part et d'autre des zones initialement recouvertes par les ensembles 32, 33 en vue de peindre lesdites zones.

## Revendications

1. Procédé de fabrication d'éléments adhésifs (8, 12, 19, 31-34) destinés à être appliqués sur une surface tridimensionnelle (7) en vue de sa décoration, caractérisé en ce que :
a) on mémorise un modèle tridimensionnel constitué par une représentation mathématique de la surface tridimensionnelle (7) à décorer,
b) on mémorise complémentairement les coordonnées de lignes et points de référence (7a,7b, 7c, 7d) de la surface tridimensionnelle (7) pour obtenir un modèle tridimensionnel référencé,
c) on mémorise un modèle bidimensionnel constitué par une représentation mathématique des contours délimitant des zones à décorer, en projection dans un plan,
d) on effectue des calculs de transformation sur le modèle bidimensionnel en vue d'obtenir un modèle bidimensionnel référencé positionné par rapport à des lignes et/ou points de référence,
e) on effectue des calculs de projection du modèle bidimensionnel référencé sur le modèle tridimensionnel, de façon à obtenir une représentation mathématique des contours des zones à décorer sur la surface tridimensionnelle, associés aux lignes et points de référence,
f) on effectue des calculs de développé sur la représentation mathématique obtenue en (e) de façon à obtenir des données représentatives du développé des contours des zones à décorer et des lignes et points de référence,
g) on découpe les éléments adhésifs (8, 12, 19, 31-34) au moyen d'une machine à découper (3) à commande numérique pilotée à partir des données obtenues en (f),
h) et on reporte sur au moins certains éléments adhésifs (8, 12, 19, 31-34) découpés, les points et/ou lignes de référence, au moyen d'une machine à tracer (5) à commande numérique pilotée à partir des données obtenues en (f).

2. Procédé selon la revendication 1, caractérisé en ce que, pour une zone à décorer de la surface tridimensionnelle, (e) :
- on mémorise au moins un point de contrôle correspondant à un emplacement à partir duquel doit être effectué le contrôle de cette zone à décorer, ledit point de contrôle étant positionné dans l'espace par rapport aux lignes et points de référence du modèle tridimensionnel référencé,
- on mémorise les coordonnées d'un point du modèle tridimensionnel référencé, dit point à viser correspondant sensiblement au centre de la zone à décorer, et les coordonnées d'une droite, dite ligne de visée, passant par ledit point à viser et le point de contrôle,
- on mémorise les coordonnées dans le modèle tridimensionnel référencé, d'un plan, dit de visualisation, orthogonal à la ligne de visée et contenant le point de contrôle,
- on effectue des calculs de transformation sur le modèle bidimensionnel référencé en vue d'obtenir une représentation mathématique des contours de la zone à décorer dans le plan de visualisation,
- on effectue des calculs de transformation sur le modèle tridimensionnel référencé de façon à obtenir une représentation en vue conique suivant la ligne de visée, et avec pour origine le point de contrôle dudit modèle tridimensionnel,
- on effectue des calculs de transformation sur le modèle bidimensionnel référencé, dans le plan de visualisation, de façon à mettre en correspondance les points et lignes de référence dudit modèle bidimensionnel et du modèle tridimensionnel en vue conique,
- on effectue des calculs de projection du modèle bidimensionnel sur le modèle tridimensionnel en vue conique, orthogonalement au plan de visualisation, de façon à obtenir une représentation mathématique des contours de la zone à décorer sur la surface tridimensionnelle.

3. Procédé selon la revendication 2, appliqué à la décoration d'un aéronef (7) doté d'une pointe avant, d'un tronçon à section constante et d'une pointe arrière, caractérisé en ce que :
- pour les zones à décorer du tronçon à section constante, on mémorise une succession de points de contrôle situés sur une ligne de contrôle parallèle audit tronçon et de même longueur que ce dernier,
- pour les zones à décorer des pointes avant et arrière, on mémorise deux points de contrôle correspondant respectivement à chacune des extrémités de la ligne de contrôle précitée.

4. Procédé selon l'une des revendications précédentes, caractérisé en ce que pour une zone à décorer de la surface tridimensionnelle, (f) :
f1) on effectue des calculs de transformation sur le modèle tridimensionnel en vue d'obtenir, par approximation, une représentation mathématique d'une surface tridimensionnelle développable,
f2) on effectue des calculs de projection orthogonale des contours de la zone à décorer et des lignes et/ou points de référence liés à cette zone, de façon à obtenir une représentation mathématique desdits contours et lignes et/ou points de référence sur la surface tridimensionnelle développable,
f3) on effectue des calculs de développé sur la représentation mathématique obtenue en f2) de façon à obtenir des données représentatives du développé des contours des zones à décorer et/ou des lignes et points de référence.

5. Procédé selon la revendication 4 appliqué à la décoration d'une surface tridimensionnelle, tel qu'un aéronef (7), composée de formes complexes, caractérisé en ce que :
(a) on mémorise un modèle tridimensionnel constitué d'un ensemble de surfaces élémentaires, dites pavés, liées entre elles par des lignes frontières,
f1) on sélectionne l'ensemble des pavés de la surface tridimensionnelle contenant les contours de la zone à décorer et les points et/ou lignes de référence liés à cette zone, et formant un sous-ensemble de ladite surface tridimensionnelle,
. on mémorise des données représentatives du sous-ensemble de pavés précité,
. on effectue sur ce sous-ensemble de pavés, des calculs de transformation en vue d'obtenir, par approximation, une représentation mathématique d'une surface développable.

6. Procédé selon l'une des revendications précédentes, caractérisé en ce qu'il consiste à réaliser deux types d'éléments adhésifs destinés à remplir des fonctions différentes :
- des éléments adhésifs (31-34), dits de décoration, délimités par les zones (40-42) à décorer,
- des éléments adhésifs (8, 12, 19), dits de positionnement, destinés à être appliqués sur la surface tridimensionnelle (7) en correspondance avec des lignes et/ou points de référence (7a-7d) de celle-ci, en vue de permettre de positionner les éléments de décoration (31-34) par rapport auxdits lignes et/ou points de référence.

7. Dispositif pour la fabrication d'éléments adhésifs destinés à être appliqués sur une surface tridimensionnelle en vue de sa décoration, caractérisé en ce qu'il comprend en combinaison :
- des moyens de mémorisation de modèles tridimensionnels référencés constitués par des représentations mathématiques de surfaces tridimensionnelles (7) à décorer et par des coordonnées de lignes et points de référence (7a-7d) desdites surfaces,
- des moyens de mémorisation de modèles bidimensionnels constitués par des représentations mathématiques de contours délimitant des zones à décorer, en projection dans un plan,
- une unité de calcul (1) connectée aux moyens de mémorisation et programmée pour effectuer, à partir de données mémorisées représentatives d'une surface tridimensionnelle à décorer, et de contours délimitant une zone à décorer,
. des calculs de transformation sur le modèle bidimensionnel en vue d'obtenir un modèle bidimensionnel référencé positionné par rapport à des lignes et/ou points de référence,
. des calculs de projection du modèle bidimensionnel référencé sur le modèle tridimensionnel, de façon à obtenir une représentation mathématique des contours des zones à décorer sur la surface tridimensionnelle, associés aux lignes et points de référence,
. et des calculs de développé sur la représentation mathématique précitée de façon à obtenir des données représentatives du développé des contours des zones à décorer, et des lignes et points de référence,
- des moyens de visualisation (2) connectés à l'unité de calcul (1) en vue de permettre une visualisation interactive lors de chacune des étapes de calcul précitées,
- une machine à découper (3) à commande numérique destinée à être pilotée à partir des données générées par l'unité de calcul (1),
- et une machine à tracer (5) à commande numérique destinée à être pilotée à partir des données générées par l'unité de calcul (1).

## Patentansprüche

1. Verfahren zur Herstellung von zum Auftrag an einer dreidimensionalen Oberfläche (7) zwecks deren Dekoration bestimmten Klebeelementen (8, 12, 19, 31-34), dadurch gekennzeichnet, daß:
a) ein durch eine mathematische Wiedergabe der zu dekorierenden dreidimensionalen Oberfläche (7) gebildetes dreidimensionales Modell gespeichert wird,
b) zwecks Erzielung eines mit einem Bezugssystem versehenen dreidimensionalen Modells die Koordinaten von Bezugslinien und Bezugspunkten (7a, 7b, 7c, 7d) der dreidimensionalen Oberfläche (7) zusätzlich gespeichert werden,
c) ein durch eine mathematische Wiedergabe der die zu dekorierenden Zonen abgrenzenden Konturen gebildetes zweidimensionales Modell in auf eine Ebene projizierter Form gespeichert wird,
d) Transformationsberechnungen hinsichtlich des zweidimensionalen Modells durchgeführt werden, um ein im Verhältnis zu den Bezugslinien und/oder -punkten mit einem Bezugssystem versehenes zweidimensionales Modell zu erhalten,
e) Berechnungen der Projektion des mit einem Bezugssystem versehenen zweidimensionalen Modells auf das dreidimensionale Modell durchgeführt werden, um eine mathematische Wiedergabe der Konturen der auf der dreidimensionalen Oberfläche zu dekorierenden Zonen zu erhalten, wobei diese den Bezugslinien und -punkten zugeordnet sind,
f) an der in Schritt (e) erhaltenen mathematischen Wiedergabe Abwicklungsberechnungen durchgeführt werden, um für die Abwicklung der Konturen der zu dekorierenden Zonen und die Bezugslinien und - punkte repräsentative Daten zu erhalten,
g) die Klebeelemente (8, 12, 19, 31-34) mit Hilfe einer Schneidemaschine (3) zugeschnitten werden, wobei die besagte Maschine aufgrund der in Schritt (f) erhaltenen Daten numerisch gesteuert wird,
h) und auf mindestens gewissen zugeschnittenen Klebeelementen (8, 12, 19, 31-34) mit Hilfe einer numerisch aufgrund der in Schritt (f) erhaltenen Daten gesteuerten Markiermaschine übertragen werden.

2. Verfahren nach Anspruch 1, dadurch gekennzeichnet, daß hinsichtlich einer zu dekorierenden Zone der dreidimensionalen Oberfläche, (e) :
- mindestens ein Prüfpunkt gespeichert wird, der einem Bereich entspricht, von dem aus die Prüfung der besagten zu dekorierenden Zone zu bewirken ist, wobei sich der besagte Prüfpunkt im Verhältnis zu den Bezugslinien und -punkten des mit einem Bezugssystem versehenen dreidimensionalen Modells im Raum befindet,
- die Koordinaten eines Punktes des mit einem Bezugssystem versehenen dreidimensionalen Modells, des sogenannten Zielpunkts, der im wesentlichen dem Mittelpunkt der zu dekorierenden Zone entspricht, sowie die Koordinaten einer Geraden, der sogenannten Ziellinie, die durch den besagten Zielpunkt und den besagten Prüfpunkt verläuft, gespeichert werden,
- an dem mit einem Bezugssystem versehenen dreidimensionalen Modell die Koordinaten einer Ebene, der sogenannten Darstellebene, gespeichert werden, wobei die besagte Ebene zu der Ziellinie senkrecht ist und den Prüfpunkt enthält,
- Transformationsberechnungen hinsichtlich des mit einem Bezugssystem versehenen zweidimensionalen Modells durchgeführt werden, um eine mathematische Wiedergabe der Konturen der zu dekorierenden Zone in der Darstellebene zu erhalten,
- Transformationsberechnungen hinsichtlich des mit einem Bezugssystem versehenen dreidimensionalen Modells durchgeführt werden, um eine Wiedergabe in konischer Sicht gemäß der Ziellinie zu erhalten, wobei der Prüfpunkt des besagten dreidimensionalen Modells als Ursprung dient,
- Transformationsberechnungen hinsichtlich des mit einem Bezugssystem versehenen zweidimensionalen Modells in der Darstellebene durchgeführt werden, um die Bezugspunkte und -linien des besagten zweidimensionalen Modells und des besagten dreidimensionalen Modells in konischer Sicht in Einklang zu bringen,
- Berechnungen der Projektion des zweidimensionalen Modells auf das dreidimensionale Modell in konischer Sicht senkrecht zu der Darstellebene durchgeführt werden, um eine mathematische Wiedergabe der Konturen der auf der dreidimensionalen Oberfläche zu dekorierenden Zone zu erhalten.

3. Verfahren nach Anspruch 2 betreffend die Dekoration eines Luftfahrzeugs (7) mit einem vorderen Ende, einem Abschnitt konstanten Querschnitts und einem hinteren Ende, dadurch gekennzeichnet, daß
- hinsichtlich der zu dekorierenden Zonen des Abschnitts konstanten Querschnitts eine Folge von Prüfpunkten gespeichert wird, wobei die besagten Prüfpunkte auf einer parallel zu dem besagten Abschnitt verlaufenden Prüflinie gelegen sind, deren Länge mit der des besagten Abschnitts identisch ist,
- hinsichtlich der zu dekorierenden Zonen des vorderen und des hinteren Endes zwei Prüfpunkte gespeichert werden, die dem einen bzw. dem anderen Ende der besagten Prüflinie entsprechen.

4. Verfahren nach einem der vorstehenden Ansprüche, dadurch gekennzeichnet, daß hinsichtlich einer zu dekorierenden Zone der dreidimensionalen Oberfläche, (f):
f1) Transformationsberechnungen hinsichtlich des dreidimensionalen Modells durchgeführt werden, um durch Annäherung eine mathematische Wiedergabe einer abwickelbaren dreidimensionalen Oberfläche zu erhalten,
f2) Berechnungen der senkrechten Projektion der Konturen der zu dekorierenden Zone und der der besagten Zone zugeordneten Bezugslinien und/oder -punkte durchgeführt werden, um eine mathematische Wiedergabe der besagten Konturen und der besagten Bezugslinien und/oder -punkte auf der abwickelbaren dreidimensionalen Oberfläche zu erhalten,
f3) an der in Schritt f2) erhaltenen mathematischen Wiedergabe Abwicklungsberechnungen durchgeführt werden, um für die Abwicklung der Konturen der zu dekorierenden Zonen und/oder der Bezugslinien und -punkte repräsentative Daten zu erhalten.

5. Verfahren nach Anspruch 4 betreffend die Dekoration einer aus komplexen Formen bestehenden dreidimensionalen Oberfläche wie der eines Luftfahrzeugs (7), dadurch gekennzeichnet, daß:
(a) ein durch eine Menge von Flächenelementen, sogenannten Blöcken, gebildetes dreidimensionales Modell gespeichert wird, wobei die besagten Blöcke über Grenzlinien aneinander angrenzen,
fl) die Menge der die Konturen der zu dekorierenden Zone und die mit dieser Zone in Verbindung stehenden Bezugspunkte und/oder -linien enthaltenden und eine Teilmenge der besagten dreidimensionalen Oberfläche bildenden Blöcke gewählt wird,
. repräsentative Daten der besagten Teilmenge von Blöcken gespeichert werden,
. an der besagten Teilmenge von Blöcken Transformationsberechnungen durchgeführt werden, um durch Annäherung eine mathematische Wiedergabe einer abwickelbaren Oberfläche zu erhalten.

6. Verfahren nach einem der vorstehenden Ansprüche, dadurch gekennzeichnet, daß es darin besteht, zwei Arten von Klebeelementen für unterschiedliche Funktionen herzustellen:
- Klebeelemente (31-34), sogenannte Dekorationselemente, die durch die zu dekorierenden Zonen (40-42) abgegrenzt sind,
- Klebeelemente (8, 12, 19), sogenannte Positionierelemente, die auf die dreidimensionale Oberfläche (7) im Einklang mit den Bezugslinien und/oder -punkten (7a-7d) der besagten Oberfläche aufzutragen sind, um die Dekorationselemente (31-34) im Verhältnis zu den besagten Bezugslinien und/oder -punkten zu positionieren.

7. Vorrichtung zur Herstellung von Klebeelementen zum Auftrag auf eine dreidimensionale Oberfläche zwecks deren Dekoration, dadurch gekennzeichnet, daß sie in Kombination folgende Teile umfaßt:
- Mittel zum Speichern von mit einem Bezugssystem versehenen dreidimensionalen Modellen, die durch mathematische Wiedergaben von zu dekorierenden dreidimensionalen Oberflächen (7) und durch Koordinaten von Bezugslinien und -punkten (7a-7d) der besagten Oberflächen gebildet werden,
- Mittel zum Speichern von zweidimensionalen Modellen, die durch mathematische Wiedergaben von zu dekorierenden Zonen abgrenzenden Konturen in auf eine Ebene projizierter Form gebildet werden,
- eine mit den Speichermitteln in Verbindung stehende Berechnungseinheit (1), die so programmiert ist, daß sie aufgrund von gespeicherten Daten, die für eine zu dekorierende dreidimensionale Oberfläche und für eine zu dekorierende Zone abgrenzende Konturen repräsentativ sind,folgende Berechnungen durchführt:
. Transformationsberechnungen hinsichtlich des zweidimensionalen Modells, um ein mit einem Bezugssystem versehenes zweidimensionales Modell zu erhalten, das im Verhältnis zu Bezugslinien und/oder -punkten positioniert ist,
. Berechnungen der Projektion des mit einem Bezugssystem versehenen zweidimensionalen Modells auf das dreidimensionale Modell, um eine mathematische Wiedergabe der Konturen der auf der dreidimensionalen Oberfläche zu dekorierenden Zonen zu erhalten, wobei die besagten Konturen mit den Bezugslinien und -punkten in Verbindung stehen,
. und Abwicklungsberechnungen hinsichtlich der besagten mathematischen Wiedergabe, um für die Abwicklung der Konturen der zu dekorierenden Zonen sowie für die Bezugslinien und -punkte repräsentative Daten zu erhalten,
- Darstellmittel (2), die mit der Berechnungseinheit (1) in Verbindung stehen, so daß im Zuge jeder der besagten Berechnungsstufen eine interaktive Darstellung möglich ist,
- eine numerisch gesteuerte Schneidemaschine (3) zur Steuerung aufgrund der durch die Berechnungseinheit (1) erzeugte Daten,
- und eine numerisch gesteuerte Markiermaschine (5) zur Steuerung aufgrund der durch die Berechnungseinheit (1) erzeugten Daten.

## Claims

1. Process for manufacturing adhesive elements (8, 12, 19, 31-34) intended for application to a three-dimensional surface (7) with a view to decorating the latter, characterised in that:
a) a three-dimensional model is stored, said model being constituted by a mathematical representation of the three-dimensional surface (7) to be decorated,
b) the coordinates of reference lines and points (7a, 7b, 7c, 7d) of the three-dimensional surface (7) are additionally stored in order to obtain a three-dimensional model endowed with a reference system,
c) a two-dimensional model is stored, said model being constituted by a mathematical representation of the contours delimiting the zones to be decorated as projected in a plane,
d) transformation calculations are carried out in respect of the two-dimensional model with a view to obtaining a two-dimensional model endowed with a reference system, said model being positioned in relation to the references lines and/or points,
e) calculations are carried out regarding the projection of the two-dimensional model endowed with a reference system onto the three-dimensional model so as to obtain a mathematical representation of the contours of the zones to be decorated on the three-dimensional surface, said contours being associated with the reference lines and points,
f) development calculations are carried out in respect of the mathematical representation obtained in (e) so as to obtain data representative of the development of the contours of the zones to be decorated and of the reference lines and points,
g) adhesive elements (8, 12, 19, 31-34) are cut out with the aid of a cutting machine (3) which is numerically controlled on the basis of the data obtained in (f),
h) and at least on some of the cut-out adhesive elements (8, 12, 19, 31-34) the reference points and/or lines are transferred with the aid of a marking machine (5) which is numerically controlled on the basis of the data obtained in (f).

2. Process according to Claim 1, characterised in that, in respect of a zone to be decorated pertaining to the three-dimensional surface, (e) :
- at least one control point is stored, said control point corresponding to a site from which said zone to be decorated is to be controlled and being located in space in relation to the reference lines and points of the three-dimensional model endowed with a reference system,
- the coordinates are stored of a point of the three-dimensional model endowed with a reference system, said point, the so-called sighting point, corresponding substantially to the centre of the zone to be decorated, and the coordinates are stored of a straight line, the so-called sighting line, which passes through said sighting point and the control point,
- in the three-dimensional model endowed with a reference system the coordinates are stored of the plane, the so-called visualisation plane, said plane being orthogonal to the sighting line and containing the control point,
- transformation calculations are carried out in respect of the two-dimensional model endowed with a reference system with a view to obtaining a mathematical representation of the contours of the zone to be decorated in the visualisation plane,
- transformation calculations are carried out in respect of the three-dimensional model endowed with a reference system so as to obtain a representation in conical view along the sighting line, whereby the control point of said three-dimensional model serves as the origin,
- transformation calculations are carried out in respect of the two-dimensional model endowed with a reference system within the visualisation plane so as to cause the reference points and lines of said two-dimensional model and said three-dimensional model to correspond in conical view,
- calculations are carried out as regards the projection of the two-dimensional model onto the three-dimensional model in conical view and orthogonally to the visualisation plane so as to obtain a mathematical representation of the contours of the zone to be decorated on the three-dimensional surface.

3. Process according to Claim 2 applied to the decoration of an aircraft (7) having a front end, a part having a constant cross-section and a rear end, characterised in that:
- in respect of the zones to be decorated pertaining to the part having a constant cross-section a succession of control points are stored, said control points being situated on a control line parallel to said part and having the same length as the latter,
- in respect of the zones to be decorated pertaining to the front end and the rear end two control points are stored, said control points corresponding respectively to each of the ends of the aforementioned control line.

4. Process according to one of the preceding claims, characterised in that in respect of a zone to be decorated pertaining to the three-dimensional surface, (f) :
f1) transformation calculations-are carried out in respect of the three-dimensional model in order to obtain, by approximation, a mathematical representation of a developable three-dimensional surface,
f2) calculations are carried out regarding the orthogonal projection of the contours of the zone to be decorated and of the reference lines and/or points associated with said zone so as to obtain a mathematical representation of said contours and reference lines and/or points on the developable three-dimensional surface,
f3) development calculations are carried out in respect of the mathematical representation obtained in f2) so as to obtain data representative of the development of the contours of the zones to be decorated and/or the reference lines and points.

5. Process according to Claim 4 applied to the decoration of a three-dimensional surface such as an aircraft (7) composed of complex shapes, characterised in that:
(a) a three-dimensional model is stored, said model being constituted by a set of surface elements, so-called blocks, joined to one another by boundary lines,
f1) the set of blocks of the three-dimensional surface containing the contours of the zone to be decorated and the reference points and/or lines associated with said zone and forming a subset of said three-dimensional surface is selected;
. data representative of the aforementioned subset of blocks are stored,
. said subset of blocks is subjected to transformation calculations with a view to obtaining, by approximation, a mathematical representation of a developable surface.

6. Process according to one of the preceding claims, characterised in that it consists in creating two types of adhesive element intended to perform different functions:
- adhesive elements (31-34), so-called decoration elements, delimited by the zones (40-42) to be decorated,
- adhesive elements (8, 12, 19), so-called positioning elements, intended for application to the three-dimensional surface (7) in accordance with the reference lines and/or points (7a-7d) of the latter, with a view to enabling positioning of the decoration elements (31-34) in relation to said reference lines and/or points.

7. Device for manufacturing adhesive elements intended for application to a three-dimensional surface with a view to its decoration, characterised in that it comprises in combination:
- means for storing three-dimensional models endowed with a reference system, said models being constituted by mathematical representations of three-dimensional surfaces (7) to be decorated and by coordinates of reference lines and points (7a-7d) of said surfaces,
- means for storing two-dimensional models constituted by mathematical representations of contours delimiting the zones to be decorated as projected in a plane,
- a calculating unit (1) connected to the storing means and programmed to carry out, on the basis of stored data which are representative of a three-dimensional surface to be decorated and of contours delimiting a zone to be decorated:
. transformation calculations in respect of the two-dimensional model with a view to obtaining a two-dimensional model endowed with a reference system, said model being positioned in relation to reference lines and/or points,
. calculations regarding the projection of the two- dimensional model endowed with a reference system onto the three- dimensional model so as to obtain a mathematical representation of the contours of the zones to be decorated on the three-dimensional surface, said contours being associated with the reference lines and points,
. and development calculations in respect of the aforementioned mathematical representation so as to obtain data representative of the development of the contours of the zones to be decorated and of the reference lines and points,
- visualisation means (2) connected to the calculating unit (1) with a view to enabling interactive visualisation in each of the aforementioned calculating stages,
- a numerically controlled cutting machine (3) for control on the basis of data generated by the calculating unit (1),
- a numerically controlled marking machine (5) for control on the basis of data generated by the calculating unit (1).
